# EUROPEAN PATENT APPLICATION

(11) **EP 2 336 851 A2**
(43) Date of publication of application: **22.06.2011**
(21) Application number: 10189523.3
(22) Date of filing: 29.10.2010
(51) Int. Cl.: G06F 3/023, G06F 3/048

(54) **Image forming apparatus and character input method thereof**

(30) Priority: 21.12.2009 KR 20090128228
(71) Applicant: Samsung Electronics Co., Ltd., Yeongtong-gu Suwon-si, Gyeonggi-do (KR)
(72) Inventor: Kim, Hyuck, Gyeonggi-do (KR)
(74) Representative: Bruce, Alexander Richard Henry

(57) **Abstract**

An image forming apparatus and a character input method thereof. The character input method in an image forming apparatus including a display unit of a touch screen, includes displaying a soft keyboard on the display unit, the soft keyboard including character keys to receive character input and a display window to display input characters; selecting character keys corresponding to characters to be input; and displaying characters corresponding to the selected character keys in the display window and displaying the characters in pop-up windows adjacent to the selected character keys, wherein the image forming apparatus is operative to perform at least one of print, copy, scan, fax transmission, and email transmission functions. A user's convenience can be increased by providing a pop-up window which display inputted characters, so that a user can confirm the input characters, and typographical errors can be reduced .

## Description

The present invention relates to an image forming apparatus and a character input method thereof, and more particularly, to an image forming apparatus which is input with characters using a soft keyboard displayed on a touch screen, and a character input method thereof.

An image forming apparatus forms an image to be printed on a printing medium such as a paper. Such an image forming apparatus may be implemented by a printer, a copier, a facsimile machine, a multifunction printer (MFP) with two or more functions, or others known in the art.

The image forming apparatus is generally provided with a user input unit which receives various data and instructions from a user. Such a user input unit may include character keys indicating various functions and numbers or a touch screen which is displayed on a display unit such as a graphics user interface (GUI) and receives data and instructions from a user who touches the screen.

The image forming apparatus may be input with characters such as e-mail addresses, fax numbers and so on through a soft keyboard (virtual keyboard) displayed on the touch screen as the user input unit.

The soft keyboard may be divided into an input area in which buttons for character input are displayed and a display area in which input characters are displayed. However, the input and display areas of the soft keyboard are mostly spaced by a predetermined distance from each other, and therefore, a user unskilled in using the soft keyboard touches the input area to input characters and then confirms the input characters from the display area.

Accordingly, it takes much time for a user to input characters, it is difficult for the user to confirm whether or not there occur typographical errors, and it is inconvenient for the user since typographical errors require separate correction. In addition, although conventional soft keyboards support a function of distinctly displaying particular buttons selected by a user by enlargement or using colors, it is difficult for the user to check whether or not words or sentences input by the user include typographical errors since only the currently selected buttons are distinctly displayed.

Accordingly, exemplary embodiments of the present invention provide an image forming apparatus to increase a user's convenience by providing a pop-up window to display input characters on a soft keyboard in the unit of word, so that a user can confirm the input characters, the possibility of typographical errors can be reduced and characters can be input at a higher speed, and a character input method thereof.

Additional features and utilities of the present invention will be set forth in part in the description which follows and, in part, will be obvious from the description, or may be learned by practice of the present general inventive concept.

Exemplary embodiments of the present invention may provide a character input method in an image forming apparatus including a display unit of a touch screen, the method including displaying a soft keyboard on the display unit, the soft keyboard including character keys to receive character input and a display window to display input characters, selecting character keys corresponding to characters to be input, and displaying characters corresponding to the selected character keys in the display window and displaying the characters in pop-up windows adjacent to the selected character keys, wherein the image forming apparatus is operative to perform at least one of print, copy, scan, fax transmission/receipt and email transmission functions.

The characters displayed in the display window and the pop-up windows may be equally displayed until a character key corresponding to a blank space character of the soft keyboard is input.

The pop-up windows may be arranged such that the character keys of the soft keyboard can be input and/or are selectable.

The displaying the characters may include displaying a transparent area in which the pop-up windows overlap the character keys of the soft keyboard, so that the character keys corresponding to the transparent area can be identified.

The method may include setting a period of time during which the pop-up windows are displayed, and concealing the displayed pop-up windows when the set period of time elapses.

The method may include changing the set period of time according to at least a number of input characters received.

The method may include changing positions at which the pop-up windows are displayed according to positions of the character keys on the soft keyboard.

Exemplary embodiments of the present invention may also provide an image forming apparatus including a touch screen, including a display unit to display a soft keyboard using the touch screen, the soft keyboard including character keys to receive character input and a display window to display of input characters, a user input unit to select character keys corresponding to characters to be input, and a control unit to control the display unit to display characters corresponding to the selected character keys in the display window and to display the characters in pop-up windows adjacent to the selected character keys, wherein the image forming apparatus is operative to perform at least one of print, copy, scan, fax transmission/receipt, and email transmission functions.

The characters displayed in the display window and the pop-up windows may be equally displayed until a character key corresponding to a blank space character of the soft keyboard is received as input.

The pop-up windows may be arranged such that the character keys of the soft keyboard can be input and/or are selectable.

The display unit may display a transparent area in which the pop-up windows overlap the character keys of the soft keyboard, so that the character keys corresponding to the transparent area can be identified.

A period of time during which the pop-up windows are displayed may be set, and the display unit may conceal the displayed pop-up windows when the set period of time elapses.

The set period of time may be changed depending on length of input characters and/or the number of input characters received.

Positions at which the pop-up windows are displayed may be changed according to positions of the character keys on the soft keyboard.

Exemplary embodiments of the present invention may also provide a character input method using a display unit having a touch screen, including displaying a soft keyboard on the display unit, the soft keyboard including character keys to receive character input and a display window to display input characters, selecting character keys corresponding to characters to be input, and displaying characters corresponding to the selected character keys in the display window and displaying the characters in pop-up windows adjacent to the selected character keys.

The characters displayed in the display window and the pop-up windows may be equally displayed until a character key corresponding to a blank space character of the soft keyboard is input.

The pop-up windows may be arranged such that the character keys of the soft keyboard can be input and/or are selectable.

Exemplary embodiments of the present invention may also provide a method of character input, the method including displaying a plurality of character keys on a display, receiving a selection of at least one of the plurality of character keys, and displaying one or more characters on the display corresponding to the received selection of the at least one of the plurality of character keys, where each character is displayed in pop-up windows adjacent to the selected character key.

The method may also include where the pop-up windows are arranged in the display such that the plurality of character keys are selectable.

The method may also include displaying the pop-up windows for a predetermined period of time, and concealing the displayed pop-up windows when the predetermined period of time elapses.

The method may also include changing the predetermined period of time according to a number of selections of the at least one of the plurality of character keys received.

The method may also include changing positions at which the pop-up windows are displayed according to positions of the plurality of character keys on the display.

Exemplary embodiments of the present invention may also provide a display apparatus, including a display unit to display a plurality of character keys on the display unit, an input unit to receive a selection of at least one of the plurality of character keys, and a control unit to control the display of one or more characters on the display unit corresponding to the received selection of the at least one of the plurality of character keys, where each character is displayed in pop-up windows adjacent to the selected character key.

The apparatus may also include where the control unit arranges the pop-up windows to be displayed on the display unit such that the plurality of character keys are selectable.

The apparatus may also include where the control unit controls the display of the pop-up windows on the display unit for a predetermined period of time, and controls the concealment of the displayed pop-up windows when the predetermined period of time elapses.

The apparatus may also include where the control unit controls a change of the predetermined period of time according to a number of selections of the at least one of the plurality of character keys received by the input unit.

The apparatus may also include where the control unit controls a change of positions at which the pop-up windows are displayed on the display unit according to positions of the plurality of character keys on the display unit.

As described above, according to the image forming apparatus and the character input method of the present invention, it is possible to increase a user's convenience by providing a pop-up window which displays input characters on a soft keyboard in the unit of a word, so that a user can easily confirm the input characters, the possibility of typographical errors can be reduced and characters can be input at a higher speed.

The above and/or other aspects of the present invention will become apparent and more readily appreciated from the following description of the exemplary embodiments, taken in conjunction with the accompanying drawings, in which:
FIG. 1 is a block diagram illustrating an image forming apparatus according to exemplary embodiments of the present invention;
FIG. 2 is a view illustrating a soft keyboard displayed on a display unit according to exemplary embodiments of the present invention;
FIGS. 3 and 4 are views illustrating positions of a pop-up window of the soft keyboard according to exemplary embodiments of the present invention; and
FIG. 5 is a flow chart illustrating a character input process in the image forming apparatus according to exemplary embodiments of the present invention.

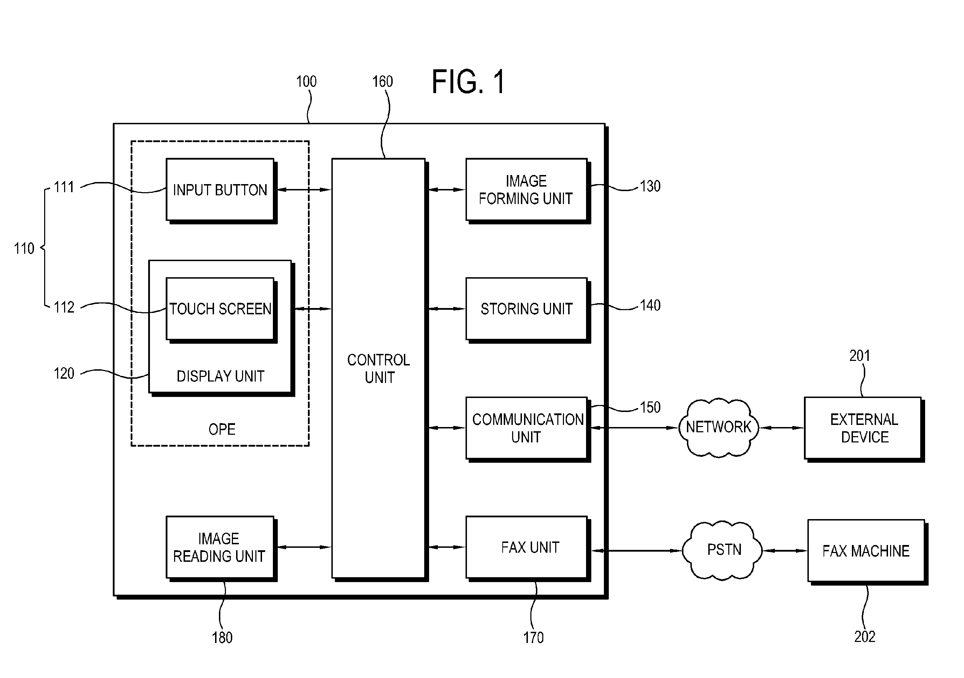

Reference will now be made in detail to the embodiments of the present invention, examples of which are illustrated in the accompanying drawings, wherein like reference numerals refer to the like elements throughout. The embodiments are described below in order to explain the present invention by referring to the figures. FIG. 1 is a block diagram illustrating an image forming apparatus 100 according to exemplary embodiments of the present invention. The image forming apparatus 100 may be a printer, a multifunction printer with two or more of print, copy, scan and fax functions, or any other suitable image forming apparatus to carry out the exemplary embodiments of the present invention as disclosed herein.

As illustrated in FIG. 1, in exemplary embodiments of the present invention, the image forming apparatus 100 can include a user input unit 110, a display unit 120, an image forming unit 130, a storing unit 140, a communication unit 150 and a control unit 160. The image forming apparatus 100 may include a fax unit 170 and an image reading unit 180, as illustrated in FIG. 1.

The user input unit 100 can receive data and/or instructions from a user.

The user input unit 110 can include input buttons 111 (hereinafter also referred to as "hard key" or "key pad") and a touch screen 112 (hereinafter also referred to as "touch panel" or "touch pad") to receive instructions through touch by a user.

The input buttons 111 can include numeric keys such as 0, 1, 2, ..., 9, special keys such as., # and the like, functional keys corresponding to one or more functions supported by the image forming apparatus 100, menu keys for setting environments of the image forming apparatus 100, etc.

The touch screen 112 may include a graphic user interface (GUI) (hereinafter also abbreviated as "UI") which is displayed by execution of a predetermined application on the display unit 120 to receive user input instructions in a touch manner. That is, the touch screen 112 can receive input and/or selections from a user.

In exemplary embodiments of the present invention, the GUI may include a soft keyboard (hereinafter also referred to as "virtual keyboard") to receive input of characters (including numbers) such as e-mail addresses, fax numbers and so on according to a character input mode of a certain function of the image forming apparatus 100.

A user can perform a log-in process to input the user's assigned ID and password through the user input unit 110. In exemplary embodiments of the present invention, the log-in includes a log-in of an administrator mode in which setting and alteration of one or more environments (e.g., all environments) of the image forming apparatus 100 are possible with no access restriction and/or limited access restrictions.

When the log-in process by the user or the log-in of the administrator mode is performed, the image forming apparatus 100 can perform a user identification process and an access permission process. In exemplary embodiments of the present invention, the user may include an administrator.

The display unit 120 may display a UI screen which illustrate settings and operation conditions of the image forming apparatus 100 to the user and may receive one or more instructions from the user. The display unit 120 may include, for example, a liquid crystal display (LCD), a light emitting diode display (LED), an organic light emitting diode display (OLED), and a driver (not illustrated) to drive the LCD, LED, and/or OLED display.

In the image forming apparatus 100 of the exemplary embodiments of the present invention, the user input unit 110 may be a GUI selectable by the user using the touch screen on the display unit 120. That is, the user input unit 110 and the display unit 120 may not be separated from each other, but may be provided as a single configuration.

In the image forming apparatus 100 of exemplary embodiments of the present invention, a single apparatus including the user input unit 110 and the display unit 120 is referred to as an "operation panel equipment (OPE)."

The display unit 120 may display the soft keyboard to receive input of characters through touch by a user depending on a predetermined function of the image forming apparatus 100, as the touch screen.

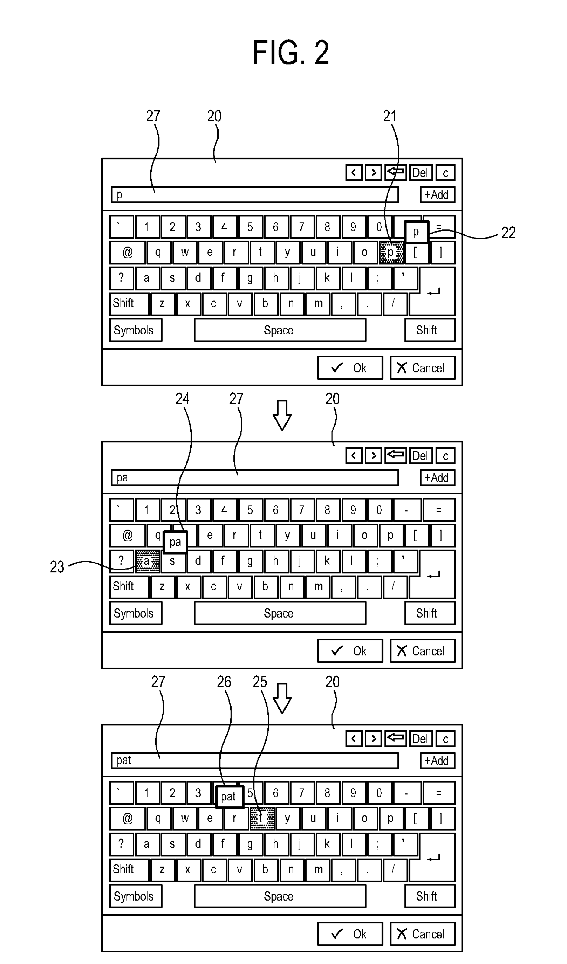

FIG. 2 is a view illustrating a soft keyboard 20 displayed on the display unit 120 according to exemplary embodiments of the present invention.

In the exemplary embodiments illustrated in FIG. 2, the soft keyboard 20 provided in the image forming apparatus 100 can include an input area having character keys corresponding to characters, such as Korean alphabets and English alphabets, which can be selected by a user, numbers such as 0, 1, 2, ..., 9, special characters such as., #, @ and so on, blank space characters such as a Space, a Tab, an Enter and so on, and a display area in which characters (including numbers) selected by the character keys can be displayed. The display area can include a display window 27 in which one or more input characters (e.g., all input characters) are displayed.

When the user selects particular character keys (e.g., 21, 23, and 25 in FIG. 2), the display unit 120 can display the selected character keys 21, 23, and 25 distinctly using color, shadow or the like. In exemplary embodiments of the present invention, the display unit 120 may display character keys 21, 23, and 25 distinctly by enlargement.

In the exemplary embodiments of the present invention, the soft keyboard 20 of the image forming apparatus 100 may include, for example, pop-up windows 22, 24, and 26 which are displayed adjacent to the selected character keys 21, 23, and 25, as illustrated in FIG. 2. Each of the pop-up windows 22, 24, and 26 can display characters which can be input to be at least one preset word unit.

For example, when the user selects a character "p" button 21, "p" can be displayed in the pop-up window 22 displayed adjacent to the p button 21, as illustrated in (a) of FIG. 2. When the user selects a character "a" button 23, "pa" can be displayed in the pop-up window 24 displayed adjacent to the p button 23, as illustrated in (b) of FIG. 2. When the user selects a character "t" button 25, "pat" can be displayed in the pop-up window 26 displayed adjacent to the t button 25, as illustrated in (c) of FIG. 2.

The user can confirm that the letters "pat" are input through the pop-up window 26 which can be displayed adjacent to the currently selected character key 25.

In exemplary embodiments of the present invention, the pop-up window 26 can be provided on the soft keyboard 20 of the image forming apparatus 100 can be displayed adjacent to the character key 25 currently selected by the user and can illustrate the input characters in the unit of word, to receive input and/or a selection (e.g., from the user) to confirm the input word (e.g., without the user looking at the display widow 27), which may decrease the number of typographical errors and increase the ease correction of typographical errors, if any.

In exemplary embodiments of the present invention, one or more of the pop-up windows 22, 24 and 26 (e.g., each of the pop-up windows 22, 24, and 26) can display characters which can be input to form at least one preset word unit.

The number of words set in the unit of display of characters may be pre-set during manufacture of the image forming apparatus 100 or may be set or altered by the user. Information on the set unit of display can be stored in the storing unit 140.

For example, if characters are set to be displayed in the pop-up windows 22, 24, and 26 in one word unit, the user may input words " 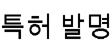 ".

Specifically, the user may input a word " 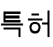 " by sequentially selecting buttons corresponding to 'E', '—', '¬', ' 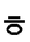 ' and ' ┤'

The pop-up windows 22, 24, and 26 can display the input word in the following order adjacent to the buttons currently selected by the user. 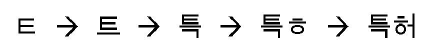

Here, if characters are set to be displayed in the pop-up windows 22, 24, and 26 in one word unit, when a space character (for example, a space key or a tab key) is selected, the image forming apparatus 100 can determine that one word has been input (e.g., completely input) and can initialize the pop-up windows 22, 24, and 26 (e.g., after closing the previous input).

Accordingly, characters can be equally displayed in the display window 27 and the pop-up windows 22, 24, and 26 at least until a character key (for example, a space key) corresponding to a blank space in the soft keyboard is input, and can be differently displayed in the display window 27 and the pop-up windows 22, 24, and 26 after the character key corresponding to the blank space is input.

For example, when the space key as a blank space character and a ' 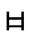 ' button are sequentially pushed after the word ' 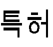 ' is input, the pop-up windows 22, 24, and 26 display ' 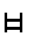 ' . When a ' 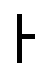 ' button is pushed, ' 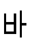 ' is displayed.

Thus, the display window 27 can display the input characters, i.e., ' 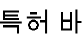 '

In this manner, the words ' 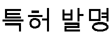 ' can be sequentially displayed in the pop-up windows 22, 24, and 26 and the display window 27 as illustrated in the following Table 1.

| Input order | 1 | 2 | 3 | 4 | 5 | 6 | 7 | 8 | 9 | 10 | 11 | 12 |
|---|---|---|---|---|---|---|---|---|---|---|---|---|
| Selected button | 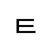 | 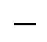 | 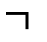 | 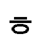 | 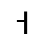 | space | 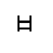 | 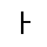 | 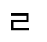 | 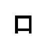 | 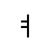 | 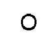 |
| Pop-up window | 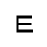 | 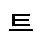 | 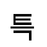 | 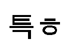 | 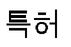 | | 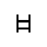 | 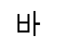 | 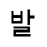 | 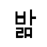 | 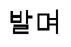 | 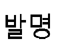 |
| Display window | 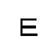 | 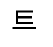 | 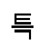 | 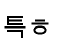 | 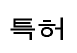 | 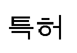 | 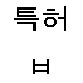 | 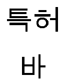 | 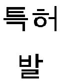 | 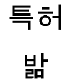 | 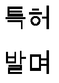 | 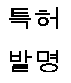 |

Similarly, if the user inputs the exemplary English words 'patent invention', these words can be displayed in the pop-up windows 22, 24 and 26 in an order as follows.

p →pa → pat → pate → paten → patent → i → in → inv → inve → inven →invent → inventi → invention → invention

As another example, if characters are set to be displayed in the pop-up windows 22, 24, and 26 in a two-word unit, when the user inputs the English words 'patent invention', these words can be displayed in the pop-up windows 22, 24, and 26 in an order as follows.

p → pa → pat → pate → paten → patent → patent i → patent in → patent inv → patent inve → patent inven → patent invent → patent inventi → patent invention → patent invention

The display unit 120 can display the pop-up windows 22, 24, and 26 adjacent to the selected character keys 21, 23, and 25 in one of up, down, left, right and diagonal directions of the character keys 21, 23, and 25.

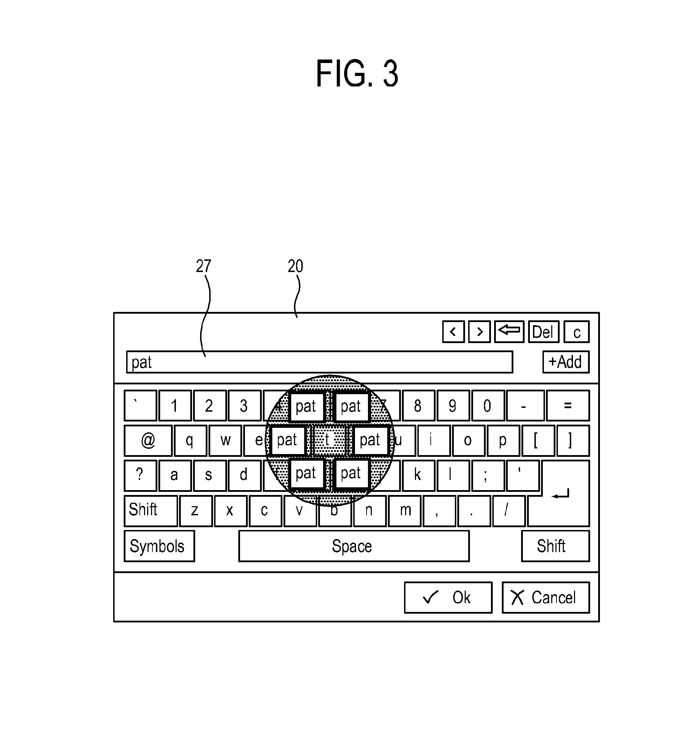

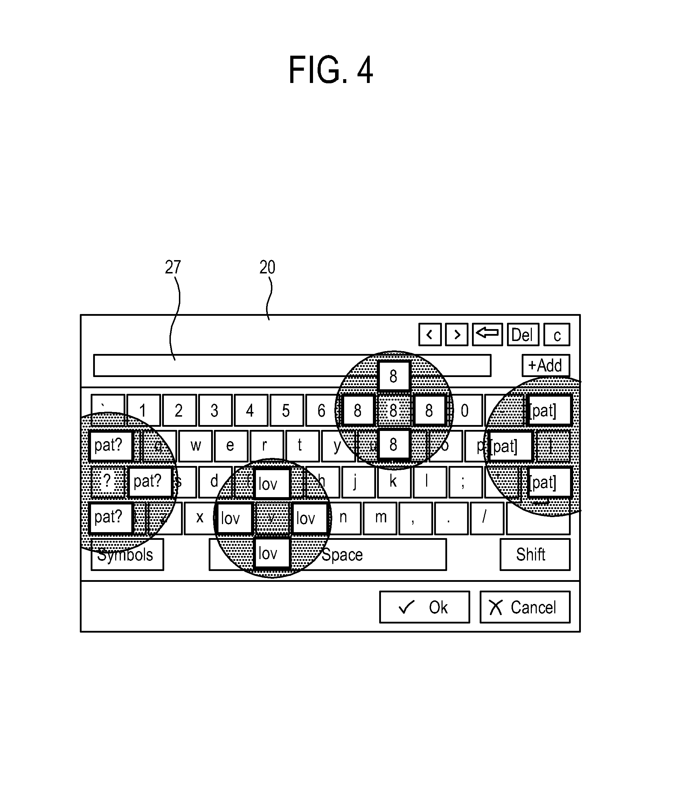

FIGS. 3 and 4 are views illustrating examples of position of pop-up windows of the soft keyboard 20 according to exemplary embodiments of the present invention. As illustrated in FIG. 3, when a user selects a character 't' button, the display unit 120 can display pop-up windows at positions adjacent to the currently selected character 't' button in one of up, down, left, right and diagonal directions of the character 't' button, that is, at one of positions of '5', '6', 'r', 'y', 'g' and 'h' or its neighborhood, or any other suitable position to carry out the exemplary embodiments of the present invention.

In this example, the display unit 120 may display the pop-up windows to be transparent or translucent so that the character key area (for example, '5', '6', 'r', 'y', 'g' and 'h' buttons) overlapping the pop-up windows is readable. This may make the character keys, which correspond to the area overlapping the pop-up window, identifiable.

In exemplary embodiments of the present invention, the pop-up windows may be arranged so that character keys of the soft keyboard can be input (i.e., pushed and/or selected) and may be changed in their display positions according to positions of the character keys on the soft keyboard.

As illustrated in FIG. 4, the pop-up windows may be positioned according to the positions of buttons selected by a user on the soft keyboard 20.

For example, as illustrated in FIG. 4, for a '8' button and a 'v' button, pop-up windows are not limited in their position as they can be displayed adjacent to the buttons in at least one of up, down, left and right directions of the buttons. For a '?' button and a ']' button, for example, the number of available positions to display the pop-up windows within the area of the soft keyboard 20 may be decreased.

For a character 'q' key and number keys, pop-up windows may be displayed in a lower (i.e., space key) direction, a left direction or a right direction.

Similarly, for a character 'H' key, displayable pop-up windows may be arranged in the form of a 3X3 matrix, and for a character 'Z' key, pop-up windows may be displayed in its upper and right sides.

In exemplary embodiments of the present invention, pop-up windows may be arranged such that they may not completely overlap other character key areas so as to allow other character keys of the soft keyboard to be input (e.g., the user may select other character keys), with the pop-up windows displayed on the soft keyboard.

The pop-up windows 22, 24, and 26 can be displayed in the display unit 120 when a selection for the character keys 21, 23, and 25 by the user is received.

The display unit 120 can conceal the pop-up windows 22, 24, and 26 when a predetermined (or reference) period of time elapses after the pop-up windows 22, 24, and 26 are displayed. That is, when the reference period of time elapses, the pop-up windows 22, 24, and 26 are not displayed.

This minimizes and/or prevents inconvenience of readability due to the pop-up windows 22, 24 and 26 when the user selects a next button.

In exemplary embodiments of the present invention, the reference period of time is set to be, for example, 700 ms to 1000 ms in consideration of average time taken for the user to recognize characters and is stored in the storing unit 140. The user may change the stored reference period of time according to his/her preference or as necessary.

The reference period of time may be differently set depending on regional and cultural trait of a user who uses the image forming apparatus 100 or languages such as Korean language, English and so on.

In exemplary embodiments of the present invention, the image forming apparatus 100 may change the reference period of time taken to conceal the pop-up windows 22, 24, and 26 depending on the length of input characters. That is, the image forming apparatus 100 may differently set the reference period of time according to the number of characters displayed in the pop-up windows 22, 24, and 26.

For example, for a word "convenient," the reference period of time during which a character 'c' is displayed in a pop-up window may be set to be 800 ms, while the reference period of time during which 8 characters 'convenie' are displayed in a pop-up window may be set to be 1000 ms. That is, the greater the number of characters, the more time it takes for the user to confirm the input characters. In exemplary embodiments of the present invention, multiple reference periods of time may be set to accommodate inputs with increased number of characters. For example, inputs up to five characters may be displayed for 800 ms, inputs of 5-10 characters may be displayed for 1200 ms, and inputs larger than 10 characters can be displayed for 1500 ms.

Hence, the storing unit 140 may store a plurality of periods of time in the form of a table in association with the number of characters, kind of languages (e.g., English, Korean, etc.), and so on.

Upon receiving a print instruction, the image forming unit 130 can form an image to be printed on at least one printing medium (e.g., paper) according to print data. In exemplary embodiments of the present invention, the printing can include printing received fax data, printing for copying a document after scanning the document, and printing of print data which are received from the outside from a host device that may include a server or are stored in the internal (for example, a hard disk drive (HDD)) or external (for example, a universal serial bus (USB) memory) of the image forming apparatus 100. The printing data may also be received from a host device (e.g., external device 201 illustrated in FIG. 1) that is communicatively coupled to a wired and/or wireless network, and provides printing data to the image forming unit 130 of the image forming apparatus 100.

The storing unit 140 can store one or more types of print data to be printed, fax data to be faxed in a fax transmission, image data scanned through the image reading unit 180, data which can be received from an external device 201 including a host device, a PC (personal computer), a server, a smartphone, a tablet computer, or the like which may be connected via the communication unit 150, a variety of setting information of the image forming apparatus 100 which is input through the user input unit 110, user authentication information for each user account, user authority information, etc. The storing unit 140 may store fax data which are received from an external fax machine 202 via the fax unit 170.

In exemplary embodiments of the present invention, the storing unit 140 may store information on previously input characters that have been received as input. The previous input character information stored in the storing unit 140 can be initialized by, for example, a selected blank space character.

The storing unit 140 can include, for example, an internal storage medium such as a HDD and/or solid state drive (SSD), an external and/or portable storage medium such as a USB memory, a memory card (for example, a memory stick, a compact flash (CF) card, a multi media card (MMC), etc.), or a memory card slot, or others known in the art.

The communication unit 150 can provide data communication with the external device 201 including a host device or a server to receive print data written with a predetermined print language therefrom.

The communication unit 150 may include a wired and/or wireless communication module which can be networked with the external device 201 such as a host device either locally or by a predetermined protocol, an interface (for example, a USB port) which can be coupled to a portable storage medium such a USB memory, etc. The communication unit 150 me be communicatively coupled to a wired and/or wireless communications network.

The communication unit 150 may transmit a scan image to the external device 201 such as a host device or a server according to a predetermined protocol using a scan-to-host function or a scan-to-server function, or transmit the scan image to the external using a scan-to-email function, or transmit the scan image to a connected USB memory for storage using a scan-to-USB function.

The fax unit 170 may include a fax communication module (for example, a modem) to convert image data generated by the image reading unit 180 into a fax signal and transmits the fax signal to the external fax machine 202 (including a multifunction printer with a fax function) using a fax network (for example, a public switched telephone network (PSTN)), or receives a fax signal from the external fax machine 202.

The image reading unit 180 can read a document (e.g., an original copy) to be scanned and can generate scan data according to the read document. The document to be scanned may be, for example, a document, a photograph, a film and the like.

The image reading unit 180 may include a photo-converting device such as a charge-coupled device or a contact image sensor (CIS), and an image processor which converts a document into image data using a signal output from the photo-converting device. In addition, the image reading unit 180 may include a scan motor which drives the photo-converting device and a guide.

The scan data generated by the image reading unit 180 may be converted into a fax signal to be transmitted by the fax unit 170 to the external fax machine 202.

The control unit 160 can control the overall operation of the image forming apparatus 100.

When a character input mode is selected in the image forming apparatus 100, the control unit 160 can control the display unit 120 to display the soft keyboard 20 through which characters can be input using the graphic user interface (GUI). In exemplary embodiments of the present invention, the character input mode may be selected from one or more functions (for example, email address input such as scan-to-email, transmission side number input of fax transmission, etc.) supported by the image forming apparatus 100.

Upon receiving a button input by the touch screen from the soft keyboard 20 displayed on the display unit 120 (e.g., receiving an input selection), the control unit 160 can determine positions of the pop-up windows 22, 24, and 26 according to positions of the character keys 21, 23, and 25 which were received as the input and can control the display unit 120 to display the pop-up windows 22, 24, and 26 in the determined positions.

In exemplary embodiments of the present invention, the control unit 160 can determine positions of the pop-up windows 22, 24, and 26 at positions adjacent to the character keys 21, 23, and 25, which received the input, in one of up, down, left, right and diagonal directions, that is, positions around the character keys 21, 23, and 25, and the determined positions of the pop-up windows 22, 24, and 26 may be limited within the area of the soft keyboard 20 of the display unit 120.

The control unit 160 may determine whether or not previous input characters exist for the received input of the character keys 21, 23, and 25, and, if the previous input characters exist, the control unit 160 can control the display unit 120 to display a plurality of characters including the previous input characters in the pop-up windows 22, 24, and 26. Information on the previous input characters can be stored in the storing unit 140.

In exemplary embodiments of the present invention, the pop-up windows 22, 24 and 26 may display a plurality of characters which can be input to constitute at least one preset word unit.

For example, if a 'p' button and an 'a' button are sequentially input without a blank space character, the control unit 160 can confirm that 'p' has been already stored as a previous character in the storing unit 140 when the 'a' button is input, and can control the display unit 120 to display 'pa' in a pop-up window.

The control unit 160 may determine whether or not a button which received an input is a blank space character such as a space key, a tab key, or an enter key, close a previous input if the button is the blank space character, and initialize previous input character information stored in the storing unit 140 and the pop-up windows 22, 24 and 26.

The control unit 160 may not display the previous input character information for the character keys 21, 23, and 25 selected after the blank space character in the pop-up windows 22, 24, and 26.

In exemplary embodiments of the present invention, if characters are set to be displayed in the pop-up windows 22, 24, and 26 in a three-word unit, the control unit 160 may not close and initialize the previous input for a first blank space character but may close and initialize the previous input when a second blank space character is input.

The control unit 160 may control the display unit 120 to conceal the pop-up windows 22, 24, and 26 when a reference period of time during which the pop-up windows 22, 24, and 26 are displayed and set elapses. In exemplary embodiments of the present invention, the reference period of time may be preset according to, for example, the number of characters, kind of languages, and so on displayed in the pop-up windows 22, 24, and 26 and may be stored in the storing unit 140.

The control unit 160 can control the display unit 120 to display all input characters in the display window 27, apart from the pop-up windows.

Although it has been illustrated in the above-described exemplary embodiments that the pop-up windows display input characters are provided in the soft keyboard of the display unit 120 of the image forming apparatus 100, the present invention may be applicable to other electronic apparatuses provided with a touch screen through which characters can be input using a soft keyboard.

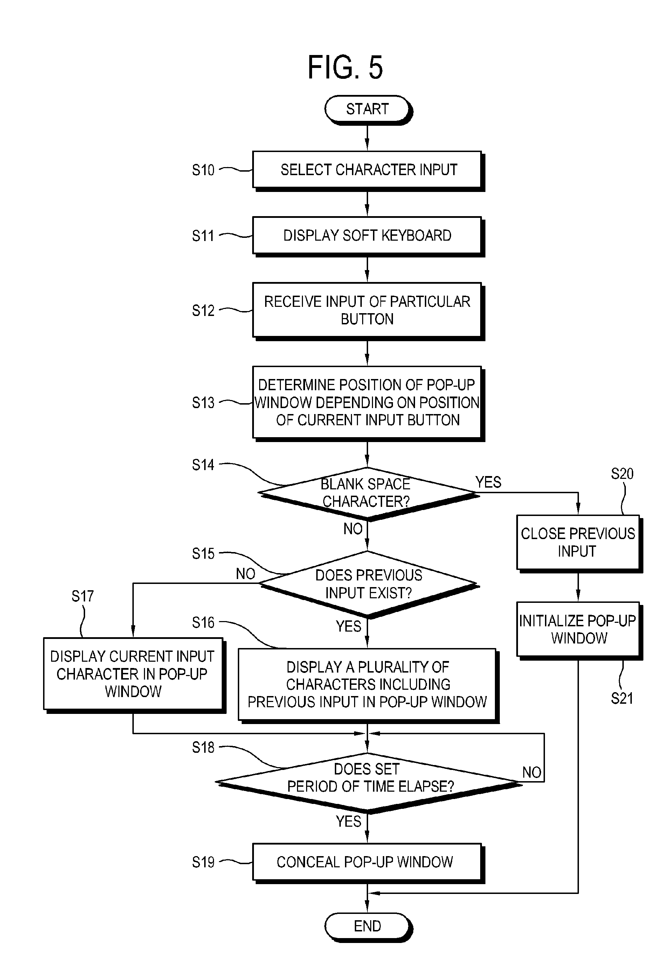

Hereinafter, a character input process in the image forming apparatus 100 will be described with reference to FIG. 5.

FIG. 5 is a flow chart illustrating a character input process in the image forming apparatus 100 according to exemplary embodiments of the present invention.

As illustrated in FIG. 5, a user may select a character input to use a certain function of the image forming apparatus 100 at operation S10.

When the character input is selected in operation S10, the control unit 160 can display, on the display unit 120, the soft keyboard 20 through which characters can be input using a touch screen (e.g., the touch screen can receive one or more input selections of characters) on which GUI is displayed at operation S11.

The user can select one or more buttons from the soft keyboard displayed in operation S11, and the control unit 160 can receive an input of the one or more selected buttons at operation S12.

At operation S13, the control unit 160 can determine a position at which a pop-up window is displayed according to at least a position of the current character key selected in operation S12.

The control unit 160 can determine whether or not the button selected in operation S12 is a blank space character at operation S14.

If it is determined in operation S14 that the selected button is not a blank space character, the control unit 160 can determine at operation S15 whether or not there exists a previous input character selected before operation S12. The control unit 160 may determine whether or not there exists the previous input character using previous input character information stored in the storing unit 140.

If it is determined in operation S15 that there exists a previous input character, the control unit 160 can control the display unit 120 in operation S16 to display a plurality of characters including the previous input character in the pop-up window whose position is determined in operation S13.

If it is determined in operation S15 that there exists no previous input character, the control unit 160 can control the display unit 120 at operation S17 to display the current input character input in operation S12 in the window whose position is determined in operation S13.

In operation S18, the control unit 160 may determine whether or not a set period of time, that is, a reference period of time, elapses after the display in the pop-up window in operations S16 and S17.

If it is determined in operation S18 that the reference period of time elapses, the control unit 160 can control the display unit 120 at operation S19 to conceal the pop-up window displayed in operation S16 and S17.

If it is determined in operation S14 that the selected button is a blank space character, the control unit 160 can close the pop-up window of the previous input at operation S20.

The control unit 160 can initialize the previous input information stored in the storing unit 140 and the pop-up window according to the previous input closing process at operation S21.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present invention can be easily construed by programmers skilled in the art to which the present invention pertains.

Although several exemplary embodiments of the present invention have been illustrated and described, it will be appreciated by those skilled in the art that changes may be made in these exemplary embodiments without departing from the principles of the invention, the scope of which is defined in the appended claims.

## Claims

1. A character input method in an image forming apparatus including a display unit of a touch screen, the method comprising:
displaying a soft keyboard on the display unit, the soft keyboard including character keys to receive character input and a display window to display input characters;
selecting character keys corresponding to characters to be input; and
displaying characters corresponding to the selected character keys in the display window and displaying the characters in pop-up windows adjacent to the selected character keys.

2. The character input method according to claim 1, wherein the characters displayed in the display window and the pop-up windows are displayed until a character key corresponding to a blank space character of the soft keyboard is input.

3. The character input method according to claim 1, wherein the pop-up windows are arranged such that the character keys of the soft keyboard are selectable.

4. The character input method according to claim 1, wherein the displaying the characters includes displaying a transparent area in which the pop-up windows overlap the character keys of the soft keyboard, so that the character keys corresponding to the transparent area are identifiable.

5. The character input method according to any one of claims 1 to 4, further comprising:
setting a period of time during which the pop-up windows are displayed; and concealing the displayed pop-up windows when the set period of time elapses.

6. The character input method according to claim 5, further comprising:
changing the set period of time according to at least a number of input characters received.

7. The character input method according to any one of claims 1 to 4, further comprising:
changing positions at which the pop-up windows are displayed according to positions of the character keys on the soft keyboard.

8. The character input method according to any one of claims 1 to 4, wherein the image forming apparatus is operative to perform at least one of print, copy, scan, fax transmission, and email transmission functions.

9. An image forming apparatus including a touch screen, comprising:
a display unit to display a soft keyboard using the touch screen, the soft keyboard including character keys to receive character input and a display window to display of input characters;
a user input unit to select character keys corresponding to characters to be input; and
a control unit to control the display unit to display characters corresponding to the selected character keys in the display window and to display the characters in pop-up windows adjacent to the selected character keys,
wherein the image forming apparatus is operative to perform at least one of print, copy, scan, fax transmission, and email transmission functions.

10. The image forming apparatus according to claim 9, wherein the characters displayed in the display window and the pop-up windows are displayed until a character key corresponding to a blank space character of the soft keyboard is received as input.

11. The image forming apparatus according to claim 9, wherein the pop-up windows are arranged such that the character keys of the soft keyboard are selectable.

12. The image forming apparatus according to claim 9, wherein the display unit displays a transparent area in which the pop-up windows overlap the character keys of the soft keyboard, so that the character keys corresponding to the transparent area are identifiable.

13. The image forming apparatus according to any one of claims 9 to 12, wherein a period of time during which the pop-up windows are displayed can be set, and
wherein the display unit conceals the displayed pop-up windows when the set period of time elapses.

14. The image forming apparatus according to claim 13, wherein the set period of time is changeable according to at least the number of input characters received.

15. The image forming apparatus according to any one of claims 9 to 12, wherein positions at which the pop-up windows are displayed is changeable according to positions of the character keys on the soft keyboard.
